# EUROPÄISCHE PATENTSCHRIFT

(11) **EP 4 291 419 B1**
(45) Veröffentlichungstag und Bekanntmachung des Hinweises auf die Patenterteilung: **11.06.2025**
(21) Anmeldenummer: 21823759.2
(22) Anmeldetag: 03.12.2021
(51) Int. Cl.: B60C 9/06, B60C 15/00, B60C 9/18, B60C 15/06, B60C 11/00

(54) **ZWEIRADLUFTREIFEN**
PNEUMATIC TYRE FOR A TWO-WHEELED VEHICLE
PNEUMATIQUE POUR DEUX-ROUES

(30) Priorität: 12.02.2021 DE 102021201322
(43) Veröffentlichungstag der Anmeldung: 20.12.2023
(73) Patentinhaber: Continental Reifen Deutschland GmbH, 30175 Hannover (DE)
(72) Erfinder: VOß, Jan-Niklas, 30165 Hannover (DE); LENGEMANN, Daniel, 30165 Hannover (DE); SCHMIDT, Andre, 30165 Hannover (DE)
(74) Vertreter: Continental Corporation
(86) Internationale Anmeldenummer: PCT/DE2021/200239
(87) Internationale Veröffentlichungsnummer: WO 2022/171226

(56) Entgegenhaltungen:
- EP-A1- 0 484 831
- WO-A1-2017/072708
- WO-A1-2019/224714
- DE-U1- 202015 000 366
- DE-U1- 202020 104 281

## Beschreibung

Die Erfindung betrifft einen Zweiradluftreifen, bevorzugt einen Fahrradreifen, besonders bevorzugt einen Rennradreifen, mit einem Laufstreifen, einer Reifenkarkasse, Reifenseitenwänden und zwei Wulstbereichen mit je einem Reifenwulst mit einem Kern, wobei die zwei Wulstbereiche als Anscheuerschutz jeweils ein axial außerhalb der Karkasse angeordnetes Wulstschutzband aufweisen, wobei die Reifenkarkasse aus einer ersten Karkasseinlage und einer zweiten Karkasseinlage jeweils aufweisend Festigkeitsträger gebildet ist, wobei die zweite Karkasseinlage in einem Zenit des Zweiradluftreifens radial innerhalb der ersten Karkasseinlage angeordnet ist und sich vom Zenit des Zweiradluftreifens über die Reifenseitenwände bis in beide Wulstbereiche erstreckt und dort den jeweiligen Kern von axial innen nach axial außen umschlingt und in einem zweiten Karkasseinlagenende unter dem Wulstschutzband des jeweiligen Wulstbereichs endet und wobei sich die erste Karkasseinlage vom Zenit des Zweiradluftreifens über die Reifenseitenwände bis in die Wulstbereiche erstreckt und dort den jeweiligen Kern von axial innen nach axial außen umschlingt.

Herkömmliche Zweiradluftreifen, bevorzugt Fahrradreifen, besonders bevorzugt Rennradreifen, sind auf Rollwiderstand, Pannenschutz und Laufleistung ausgelegt und optimiert. Diese Eigenschaften stehen teilweise miteinander in einem Zielkonflikt.

So offenbart die EP 3174738 A1 einen Rennradreifen mit einer zweilagigen Karkasse, wobei Hochschläge beider Karkasslagen die Seitenwände zum Großteil abdecken. Ein solcher Reifen weist in zumindest einem Teil der Seitenwand eine Verstärkung durch vier Lagenstärken der Karkasse auf. Die Konstruktion ermöglicht einen hohen Schnittschutz der Seitenwand. Jedoch wirkt sich der im Bereich der Seitenwand hohe Einsatz an Karkassmaterial negativ auf das Gewicht und den Rollwiderstand aus.

Eine typische Konstruktion mit einer einlagigen Karkasse zeichnet sich dadurch aus, dass die Hochschläge der Karkasseinlage bis in den Reifenzenit reichen und unter dem Laufstreifen einander überlappend enden. Eine solche Konstruktion ist einfach in der Herstellung, weist aber eine geringere Schnittfestigkeit der Seitenwand und damit eine geringere Pannensicherheit in der Seitenwand auf.

Die gattungsgemäße DE 202020104281 U1 offenbart einen Reifen mit einer zweilagigen Karkasse. wobei die Karkasshochschläge beider Karkasslagen bereits unter dem Wulstschutzband enden. Die zwei Wulstbereiche weisen als Anscheuerschutz jeweils ein von außen auf der Karkasse angeordnetes Wulstschutzband auf.

Ein solcher Reifen ist bezüglich Rollwiderstand optimiert, weist jedoch einen geringen Pannenschutz auf.

Die DE 20 2015 000366 U1 offenbart einen Fahrradreifen mit einer Reifenkarkasse mit zwei gegenüberliegenden Seitenwänden, wobei die Reifenkarkasse wenigstens abschnittsweise einen Reifeninnenraum definiert und wobei an den freien Enden der Seitenwände jeweils ein Wulst mit einem darin angeordneten Wulstkern angeordnet ist, bei dem eine dem Reifeninnenraum zugewandte Innenseite der Reifenkarkasse mit einer Gewebelage bedeckt ist, die aus monofilen Fäden mit kreisrundem Querschnitt besteht, die in ein elastisches Material eingebettet sind oder bei denen die Zwischenräume mit elastischem Material ausgefüllt sind. Die beiden Enden der Gewebelage werden jeweils von einem Gewebestreifen überlappt.

Weitere Fahrradreifen sind aus WO 2019/224714 A1, EP 0 484 831 A1 sowie WO 2017/072708 A1 bekannt.

Der Erfindung liegt die Aufgabe zu Grunde, einen Zweiradluftreifen, bevorzugt einen Fahrradreifen, besonders bevorzugt einen Rennradreifen, zu Verfügung zu stellen, bei dem die Pannensicherheit bei weiterhin gutem Rollwiderstand verbessert ist.

Gelöst wird die Aufgabe dadurch, dass die erste Karkasseinlage vom jeweiligen Wulstbereich in einem ersten Karkasseinlagenhochschlag über die jeweilige Reifenseitenwand bis unter den Laufstreifen zu einem ersten Karkasseinlagenende geführt ist und dort in dem ersten Karkasseinlagenende endet.

Ein Vorteil des erfindungsgemäßen Zweiradluftreifens, bevorzugt des Fahrradreifens, besonders bevorzugt des Rennradreifens, ist insbesondere darin zu sehen, dass durch die neue Reifenkonstruktion die Pannensicherheit wesentlich verbessert wird. Gleichzeitig weist der Reifen einen guten Rollwiderstand auf.

Erfindungswesentlich ist, dass die erste Karkasseinlage vom jeweiligen Wulstbereich in einem ersten Karkasseinlagenhochschlag über die jeweilige Reifenseitenwand bis unter den Laufstreifen zu einem ersten Karkasseinlagenende geführt ist und dort unter dem Laufstreifen in dem jeweiligen ersten Karkasseinlagenende endet. Gleichzeitig endet die zweite Karkasseinlage in ihren zweiten Karkasseinlagenenden bereits unter dem Wulstschutzband und ist somit nicht vom jeweiligen Wulstbereich aus über die Reifenseitenwände bis unter den Laufstreifen geführt.

Der Reifen weist zwei axiale Hälften auf. Somit ist in beiden axialen Hälften des Reifens in einem Bereich der Seitenwand, insbesondere radial zwischen dem zweiten Karkasseinlagenende und einem Laufstreifenende des Laufstreifens, eine Verstärkung der Seitenwand durch drei Lagenstärken der Karkasse gegeben, wobei die erste Karkasseinlage zwei Lagenstärken und die zweite Karkasseinlage eine Lagenstärke beiträgt. Durch die Verstärkung durch drei Lagenstärken ist die Schnittfestigkeit der Seitenwand im Gegensatz zu einer Karkasse mit einer Verstärkung der Seitenwand durch nur zwei Lagenstärken erheblich verbessert.

Die Verstärkung der Seitenwand durch drei Lagenstärken der Karkasse führt zwar zu einem erhöhten Reibungsverlust und einem zusätzlichen Materialeinsatz an Karkassmaterial. Allerdings ist der Zielkonflikt zwischen Pannensicherheit der Seitenwand und Rollwiderstand auf hohem Niveau zugunsten der Pannensicherheit gelöst.

Der Rollwiderstand und die Fahreigenschaften eines solchen erfindungsgemäßen Reifens sind insbesondere bessere als bei einem Reifen mit einer Verstärkung der Seitenwand durch vier Lagenstärken der Karkasse bei weiterhin guter Pannensicherheit auf.

Durch die Anordnung der ersten Karkasseinlagenenden unter dem Laufstreifen sind diese gleichzeitig vor Ablösung geschützt. Dies verbessert die Haltbarkeit und die Pannensicherheit des Zweiradreifens weiter.

Die neue Konstruktion ermöglicht durch die zwei um den Kern herumgeschlagenen Karkasseinlagen sowohl einen weiterhin einfachen Reifenbau als auch einen vorteilhaften Schutz des Kerns vor Beschädigung, insbesondere im Vergleich zu einer Karkasse mit nur einer Karkasseinlage.

Es hat sich somit herausgestellt, dass ein Zweiradreifen, bevorzugt ein Fahrradreifen, besonders bevorzugt ein Rennradreifen, aufweisend die neue Konstruktion den Zielkonflikt aus Pannensicherheit, insbesondere Pannensicherheit der Seitenwand, und Rollwiderstand auf hohem Niveau zugunsten der Pannensicherheit löst.

Gleichzeitig ermöglicht es die neuen Konstruktion durch die Anordnung der zweiten Karkasseinlagenenden unter dem jeweiligen Wulstschutzband weiterhin, dass keine direkte Verbindung eines Reifeninnenraums mit einem Reifenaußenraum durch eine der beiden Karkasseinlagen gegeben ist. Ebenso sind mit den zweiten Karkasseinlagenenden die dort endenden Festigkeitsträger der zweiten Karkasseinlage mit dem Wulstschutzband von außen abgedeckt. Hierdurch ist ein Abblasen von Luft aus dem Reifeninnenraum durch die beiden Karkasseinlagen, insbesondere im schlauchlosen Betrieb, vermieden bzw. stark reduziert, wodurch weiterhin eine hohe Luftdichtigkeit des Reifens, insbesondere im schlauchlosen Betrieb, ermöglicht ist.

Die erste Karkasseinlage endet in den ersten Karkasseinlagenenden unter dem Laufstreifen. Die ersten Karkasseinlagenenden können somit jeweils räumlich zwischen dem Laufstreifen und der zweiten Karkasseinlage sowie radial außerhalb und axial innerhalb von Laufstreifenenden des Laufstreifens angeordnet sein. Eine senkrecht zur zweiten Karkasseinlage ausgerichtete erste Gerade kann den Laufstreifen und das erste Karkasseinlagenende miteinander verbinden.

Die zweite Karkasseinlage endet in den zweiten Karkasseinlagenenden unter dem Wulstband des jeweiligen Wulstbereichs. Die zweiten Karkasseinlagenenden können somit jeweils räumlich zwischen dem jeweiligen Wulstschutzband und dem jeweiligen ersten Karkasseinlagenhochschlag im Wulstbereich angeordnet sein. Eine senkrecht zum ersten Karkasseinlagenhochschlag ausgerichtete zweite Gerade kann das Wulstschutzband und das zweite Karkasseinlagenende miteinander verbinden.

Das Wulstschutzband dient wie üblich als Anscheuerungsschutz gegenüber einem Felgenhorn im Betrieb des Reifens und vermindert so ein Freilegen der Karkassfestigkeitsträger. Das Wulstschutzband kann eine als Anlagefläche zur Felge ausgelegte Außenfläche des Wulstbereichs mitbilden oder bilden. Das Wulstschutzband kann das jeweilige zweite Karkasseinlagenende von axial außen bedecken.

Die erste Karkasseinlage und die zweite Karkasseinlage weisen jeweils parallel zueinander verlaufende Festigkeitsträger auf, die in elastomeres Material eingebettet sind. Wie üblich können die Festigkeitsträger dabei einen Winkel von 40 Grad bis 60 Grad mit der Umlaufrichtung U einschließen. Die Festigkeitsträger der ersten Karkasseinlage und der zweiten Karkasseinlage weisen einen gegenläufigen Steigungswinkel auf.

Im Folgenden werden vorteilhafte Weiterbildungen der Erfindung erläutert.

Der Reifen weist zwei axiale Hälften auf. In einer vorteilhaften Ausführungsform der Erfindung ist vorgesehen, dass jedes erste Karkasseinlagenende jeweils in derjenigen axialen Hälfte des Reifens unter dem Laufstreifen angeordnet ist, in welcher die erste Karkasseinlage in dem ersten Karkasseinlagenhochschlag über die Reifenseitenwand bis unter den Laufstreifen zum jeweiligen ersten Karkasseinlagenende geführt ist.

Die beiden ersten Karkasseinlagenhochschläge überlappen somit im Zenit des Reifens nicht. Die ersten Karkasseinlagenenden sind jeweils in derselben axialen Hälfte wie der erste Karkasseinlagenhochschlag, der in dem jeweiligen ersten Karkasseinlagenende endet, angeordnet. Die ersten Karkasseinlagenhochschläge sind somit auf die jeweilige axiale Hälfte des Reifens begrenzt angeordnet. Axial zwischen den beiden ersten Karkasseinlagenenden der ersten Karkasseinlage erfolgt somit eine Verstärkung durch genau zwei Lagenstärken der Karkasse.

Es ist somit ein Zweiradluftreifen zur Verfügung gestellt, der mit geringem Einsatz an Karkassmaterial, insbesondere im Zenit des Reifens, einen vorteilhaften Pannenschutz der Seitenwände gewährleistet. Ein solcher Reifen weist eine besonders geringen Rollwiderstand auf.

Insbesondere ist dabei jedes erste Karkasseinlagenende jeweils in derjenigen axialen Hälfte des Reifens unter einem Laufstreifenauslauf des Laufstreifens angeordnet, in welcher die erste Karkasseinlage in dem ersten Karkasseinlagenhochschlag über die Reifenseitenwand bis unter den Laufstreifen zum jeweiligen ersten Karkasseinlagenende geführt ist und in dem unter dem Laufstreifenauslauf angeordneten ersten Karkasseinlagenende endet.

Hierdurch ist der Rollwiderstand durch weiter verringerten Einsatz an einander überlappend angeordnetem Karkassmaterial optimiert. Gleichzeitig ist der Schnittschutz im Bereich der Seitenwände weiterhin gewährleistet und ein Schutz der ersten Karkasseinlagenenden vor Ablösung ermöglicht.

Die erste Karkasseinlage endet dann in den ersten Karkasseinlagenenden unter dem Laufstreifenauslauf. Die ersten Karkasseinlagenenden können somit jeweils räumlich zwischen dem Laufstreifenauslauf und der zweiten Karkasseinlage sowie radial außerhalb und axial innerhalb der Laufstreifenenden des Laufstreifens angeordnet sein. Eine senkrecht zur zweiten Karkasseinlage ausgerichtete erste Gerade kann den Laufstreifenauslauf und das erste Karkasseinlagenende miteinander verbinden.

Der Laufstreifenauslauf kann sich in jeder axialen Hälfte des Reifens vom jeweiligen Laufstreifenende aus maximal 10 mm, bevorzugt maximal 2 mm, nach axial innen erstrecken, gemessen entlang einer radial inneren Begrenzung des Laufstreifens.

In einer alternativen vorteilhaften Weiterbildung der Erfindung ist vorgesehen, dass die beiden ersten Karkasseinlagenhochschläge im Zenit des Reifens einander überlappend angeordnet sind.

Jeder der beiden ersten Karkasseinlagenhochschläge erstreckt sich von einem Wulstbereich in einer axialen Hälfte des Reifens bis unter den Laufstreifen und endet in dem jeweiligen ersten Karkasseinlagenende in der jeweils anderen axialen Hälfte des Reifens. Im Zenit des Reifens erfolgt somit eine Verstärkung des Reifens durch vier Lagenstärken der Karkasse, wobei die erste Karkasseinlage drei Lagenstärken beiträgt und die zweite Karkasseinlage eine Lagenstärke beiträgt.

Eine derartige Konstruktion kann sich zwar nachteilig auf den Rollwiderstand auswirken, allerdings ist der Schnittschutz des Reifens im Bereich des Laufstreifens stark verbessert, wodurch der Reifen eine weiter verbesserte Pannensicherheit aufweist. Dies ist insbesondere für Ganzjahresreifen und Trainingsreifen bei Rennradreifen von Bedeutung.

In einer vorteilhaften Weiterbildung der Erfindung ist vorgesehen, dass das Wulstschutzband in einem radial äußeren Ende in einer ersten Höhe von maximal 15 mm, bevorzugt von 10 mm bis 12 mm, endet, gemessen relativ zu einem äußersten Umschlagpunkt der um den Kern herumgeschlagenen Festigkeitsträger der zweiten Karkasseinlage.

Durch diese niedrige Anordnung sowohl des Wulstschutzbandes als auch der damit einhergehenden niedrigen Anordnung der zweiten Karkasseinlagenenden sind die Umschläge der zweiten Karkasseinlagen vorrangig in einem Bereich angeordnet, der im Betrieb des Reifens kaum oder keine zyklische Deformation erfährt. Somit ist der Energieverlust durch Reibung der zweiten Karkasseinlage weiter reduzierbar. Ebenso ist der Materialeinsatz für das Wulstschutzband sowie für die zweite Karkasseinlage, und damit das Gewicht des Reifens, vorteilhaft reduziert.

Zur Ermittlung einer Höhe im Wulstbereich, insbesondere der ersten Höhe oder der unten genannten zweiten Höhe, kann der Zweiradluftreifen in seinem Querschnitt so aufgebogen sein, dass die beiden Karkasseinlagen vom Zenit her kommend im Bereich der Seitenwand weitgehend geradlinig angeordnet sind und in eine bezüglich des Kerns weitgehend symmetrische Umschlingung des Kerns übergehen. In dieser Anordnung ist die jeweilige Höhe gemessen relativ zum äußersten Umschlagpunkt einer Außenkante der um den Kern herumgeschlagenen Festigkeitsträger der zweiten Karkasseinlage, gemessen parallel zu den weitgehend geradlinig angeordneten Karkasseinlagen. Weist das Wulstschutzband Fasern, insbesondere ein Gewebe auf, so können die Fasern, insbesondere die Gewebekante des Gewebes, das radial äußere Ende des Wulstschutzbandes vorgeben. Entsprechend können das erste Karkasseinlagenende und das zweite Karkasseinlagenende durch Enden der Festigkeitsträger, insbesondere durch eine Gewebekante, der jeweiligen Karkasseinlage, gegeben sein.

Entsprechende Vorteile bezüglich der zweiten Karkasseinlage sind dadurch erreichbar, dass die zweiten Karasseinlagenenden in einer zweiten Höhe von maximal 13 mm, bevorzugt von 8 mm bis 10 mm, unter dem Wulstschutzband angeordnet sind, gemessen relativ zu einem äußersten Umschlagpunkt der um den Kern herumgeschlagenen Festigkeitsträger der zweiten Karkasseinlage.

Entsprechende Vorteile ergeben sich auch, wenn die zweiten Karasseinlagenenden im jeweiligen Wulstbereich, insbesondere vom Kern herkommend vor der Seitenwand, enden.

Das Wulstschutzband kann als gummiertes Band aufweisend Fasern, insbesondere als gummiertes Gewebeband, ausgeführt sein. Bei dem Gewebeband kann es sich um ein Nesselgewebe oder ein Nylongewebe handeln.

In einer weiteren vorteilhaften Weiterbildung der Erfindung ist vorgesehen, dass das Wulstschutzband frei ist von miteinander verdrillten Fasern aufweisenden Fäden, die ein radial äußeres Ende des Wulstschutzbandes und ein inneres Ende des Wulstschutzbandes verbinden.

In einer weiteren vorteilhaften Weiterbildung der Erfindung ist vorgesehen, dass das Wulstschutzband als gummiertes Monofilamentgewebe ausgeführt ist.

Das gummierte Monofilamentgewebe vermindert das Entweichen von Luft an der Kontaktfläche zwischen Reifen und Felge besonders wirksam, insbesondere wirksamer als ein übliches Wulstschutzband mit einem Gewebe mit Fäden aus mehreren miteinander verdrillten Fasern. Grund hierfür ist, dass die Monofilamente weitgehend einzeln in der Gummierung eingebettet sind und somit ein Abblasen der Luft aus dem Reifeninnenraum zum Reifenaußenraum mittels Mikrokanälen zwischen den Fasern der Fäden des Wulstschutzbandes weitgehend vermieden ist.

Hierdurch ist eine besonders gute Luftdichtigkeit des auf einer Felge montierten Reifens ermöglicht. Vorteilhaft ist dies insbesondere für einen Schlauchlosreifen. Ein Betrieb des Reifens ohne Schlauch kann somit ohne weitere aufwändige, oftmals den Rollwiderstand verschlechternden Maßnahmen, wie z.B. einem Innerliner, ermöglicht sein.

Das als gummiertes Monofilamentgewebe ausgeführte Wulstschutzband kann dabei frei sein von miteinander verdrillten Fasern aufweisenden Fäden, die ein radial äußeres Ende des Wulstschutzbandes und ein inneres Ende des Wulstschutzbandes verbinden.

In einer weiteren vorteilhaften Weiterbildung der Erfindung ist vorgesehen, dass die Karkasse in direktem Kontakt zu einem Reifeninnenraum steht. Hierdurch ist ein besonders leichter Reifen und damit ein vorteilhafter Rollwiderstand ermöglicht. Für einen Schlauchlosreifen, insbesondere einen "Tubeless Ready" Fahrradreifen, kann eine ausreichende Luftdichtigkeit durch die beschriebenen Maßnahmen, insbesondere die Ausführung eines als gummiertes Monofilamentgewebe ausgeführtes Wulstschutzbandes, gewährleistet sein.

In einer weiteren vorteilhaften Weiterbildung der Erfindung ist vorgesehen, dass es sich um einen Schlauchlosreifen, insbesondere einen "tubeless" Reifen oder einen "Tubeless Ready" Reifen, handelt.

Schlauchlosreifen sind Reifen, die für einen schlauchlosen Betrieb des Reifens geeignet sind. Schlauchlosreifen sind insbesondere Reifen im schlauchlosen Betrieb. Schlauchlosreifen stellen eine erhöhte Anforderung an die Luftdichtigkeit sowohl des Reifens an sich als auch an die Abdichtung an der Kontaktfläche zwischen Reifen und Felge. Ein System im schlauchlosen Betrieb umfasst somit zumindest den Schlauchlosreifen und eine Felge, wobei der Schlauchlosreifen auf der Felge montiert ist und das System frei ist von einem Schlauch. Im schlauchlosen Betrieb des Schlauchlosreifens entfallen Reibungsverluste zwischen Schlauch und Reifen, so dass der Reifen einen vorteilhaften Rollwiderstand ermöglicht. Ebenfalls entfallen schlauchbasierte Pannengründe. Beim Betrieb eines Schlauchlosreifens im schlauchlosen Betrieb kann der Einsatz einer Dichtflüssigkeit, insbesondere einer Dichtmilch, die in den Reifeninnenraum zwischen Reifen und Felge verfüllt ist, die Dichtheit verbessern.

Ein Schlauchlosreifen kann ein sogenannter "Tubeless" Reifen sein, der vorrangig oder ausschließlich für den Betrieb ohne Schlauch geeignet und vorgesehen ist. Ein Tubeless Reifen kann oftmals auch ohne Dichtmilch gefahren werden.

Es kann sich bei dem Schlauchlosreifen auch um einen sogenannten "Tubeless Ready" Reifen handeln, der sowohl für den Betrieb mit als auch für den Betrieb ohne Schlauch geeignet und vorgesehen ist. In der Regel wird ein Tubeless Ready Reifen im schlauchlosen Betrieb mit einer Dichtflüssigkeit, insbesondere einer Dichtmilch, gefahren. Reifen und Felge können dabei so konstruiert sein, dass sie direkt aneinander abdichten.

Die Erfindung ist besonders vorteilhaft für Schlauchlosfahrradreifen, insbesondere Schlauchlosrennradreifen oder Schlauchlosmountainbikereifen.

In einer weiteren vorteilhaften Weiterbildung der Erfindung ist vorgesehen, dass es sich um einen Fahrradreifen geeignet und vorgesehen für einen Betrieb mit Schlauch, insbesondere um einen Clincher-Reifen, handelt. Ein System in einem Betrieb mit Schlauch umfasst somit zumindest dem Fahrradreifen und eine Felge, wobei der Fahrradreifen auf der Felge montiert ist und in einem vom Reifen und der Felge eingeschlossenen Reifeninnenraum ein weitgehend luftdicht ausgeführter Schlauch angeordnet ist. Bei einem Reifen im Betrieb mit Schlauch wird der Luftdruck über einen im Reifeninnenraum zwischen Reifen und Felge angeordneten weitgehend luftdicht ausgeführten Schlauch gehalten. Auch hierbei ermöglicht die neue Reifenkonstruktion einen vorteilhaft reduzierten Rollwiderstand.

Ein sogenannter Clincher-Reifen ist in der Regel ein Drahtreifen bzw. ein Faltreifen. Der Reifen besitzt dann einen Drahtkern bzw. einen Faltkern und wird mit dem Wulst am Felgenhorn der Felge eingehängt. Ein Clincher-Reifen ist mit einfachen Mitteln montierbar und demontierbar. Im Pannenfall kann somit der Schaden einfach behoben werden.

In einer weiteren vorteilhaften Weiterbildung der Erfindung ist vorgesehen, dass zumindest in einem Bereich der Seitenwand die beiden Karkasseinlagen, d.h. die erste Karkasseinlage und die zweite Karkasseinlage, die einzigen Festigkeitsträger aufweisenden Einlagen sind. Durch den Verzicht auf eine weitere Festigkeitsträger aufweisende Einlage ist eine besonders dünner und somit leichter und rollwiderstandsoptimierter Bereich der Seitenwand ermöglicht.

In einer weiteren vorteilhaften Weiterbildung der Erfindung ist vorgesehen, dass zwischen dem Laufstreifen und der Reifenkarkasse eine dämpfende Gummieinlage aus einem hochelastischen Kautschuk angeordnet ist, wobei die dämpfende Gummieinlage insbesondere eine Materialdicke zwischen 0,2 mm und 1 mm aufweist.

Hierdurch ist durch eine Entkopplung der Gewebelagen ein höherer Fahrkomfort sowie ein besserer Rollwiderstand ermöglicht. Durch die spezielle Materialdicke der dämpfenden Gummieinlage wird der Fahrkomfort des Fahrradreifens wesentlich verbessert, da sich der Fahrradreifen insgesamt besser dem Fahrbahnuntergrund anpassen kann. Weiter erhöht die zusätzliche Gummieinlage den Pannenschutz im Zenit.

Bevorzugt kann die dämpfende Gummieinlage aus einem hochelastischen Kautschuk mit einem Rebound-Materialwert zwischen 70 und 80 bestehen. Bei diesem Rebound-Materialwert wird ein optimaler Fahrkomfort erzielt, wobei gleichzeitig der Rollwiderstand des Reifens nicht erhöht wird.

In einer weiteren vorteilhaften Weiterbildung der Erfindung ist vorgesehen, dass zwischen dem Laufstreifen und der Reifenkarkasse eine Schutzlage aus einem aufweisend ein insbesondere reißfestes reißfesten gummierten Gewebe, bevorzugt ein einem insbesondere reißfesten gummierten Gewebe aufweisend Fasern aus Polyethylenterephthalat - Polyacrylat, oder aus einer Gummischicht angeordnet ist.

Die Schutzlage gewährleistet einen optimalen Pannenschutz im Zenit für den Zweiradluftreifen, bevorzugt den Fahrradreifen, besonders bevorzugt den Rennradreifen. Bei dem insebesondere reißfesten gummierte Gewebe aufweisend Fasern aus Polyethylenterephthalat - Polyacrylat kann es sich um ein gummiertes Gewebe handeln, das Vectranfasern aufweist oder daraus besteht. Die Gummischicht kann eine Dicke, gemessen in radialer Richtung im Reifenzenit, von maximal 6 mm aufweisen.

In einer weiteren vorteilhaften Weiterbildung der Erfindung ist vorgesehen, dass es sich um einen Fahrradreifen, insbesondere einen Rennradreifen, einen Mountain-Bike Reifen oder einen Reifen für ein Fahrrad aufweisend einen Elektromotor zum Antrieb des Fahrrads, handelt. Die neue Reifenkonstruktion eignet sich aber an sich für den Einsatz in allen Fahrradsegmenten.

Die neue Reifenkonstruktion lässt sich bei Rennradreifen besonders vorteilhaft einsetzen, da der Rollwiderstand wesentlich verringert wird. Ein Rennradreifen weist in der Regel eine maximale Reifenbreite von 35 mm auf und zeigt eine rennradspezifische geringe Profilierung des Laufstreifens.

Die neue Reifenkonstruktion, insbesondere für Schlauchlosreifen, eignet sich auch hervorragend für Mountain-Bike Reifen. Mountain-Bike Reifen weisen in der Regel eine Mindestreifenbreite von 35 mm, insbesondere 40 mm, sowie oftmals eine ausgeprägte Profilierung des Laufstreifens auf. Auch bei Mountain-Bike Reifen gewinnen Aspekte wie der Rollwiderstand einen immer höheren Stellenwert. Insbesondere kann ein schlauchloser Betrieb des Reifens von Vorteil sein, da sich dann die Pannenanfälligkeit verringert und ein solcher Reifen mit vergleichsweise niedrigerem Luftdruck gefahren werden kann.

Die neue Reifenkonstruktion eignet sich hervorragend auch für den Einsatz an Fahrrädern aufweisend einen Elektromotor zum Antrieb des Fahrrads. Bei einem solchen Einsatz ist ein geringer Rollwiderstand vorteilhaft, da er die Reichweite des Fahrrades erhöht.

Es kann es sich dabei um einen Reifen für ein Elektrofahrrad handeln. Ein Reifen für ein Elektrofahrrad kann die Prüfnorm "ECE-R75" erfüllen. Die spezielle Eignung für ein Elektrofahrrad ist oftmals durch die Bezeichnung "E-bike ready 50" gekennzeichnet.

Es kann sich dabei auch um einen Reifen für ein Pedelec handeln, bei welchem der Antrieb zumindest teilweise von dem Elektromotor unterstützt ist. Die spezielle Eignung für ein Pedelec ist oftmals durch die Bezeichnung "E-bike ready 25" gekennzeichnet.

In einer weiteren vorteilhaften Weiterbildung der Erfindung ist vorgesehen, dass es sich um einen Motorradreifen, insbesondere um einen Elektroscooterreifen, handelt. Auch ein Motorradreifen oder ein Elektroscooterreifen aufweisend die neue Konstruktion kann über den vorteilhaften Rollwiderstand zu einer verbesserten Reichweite des Fahrzeuges beitragen.

Weitere Merkmale, Vorteile und Einzelheiten der Erfindung werden nun anhand der schematischen Zeichnungen, die Ausführungsbeispiele darstellen, sowie von Vergleichsdaten näher erläutert. Dabei zeigt die
- Fig. 1 und 2:: einen Zweiradluftreifens im Querschnitt;
- Fig. 3:: einen Ausschnitt eines Zweiradreifens im Querschnitt.

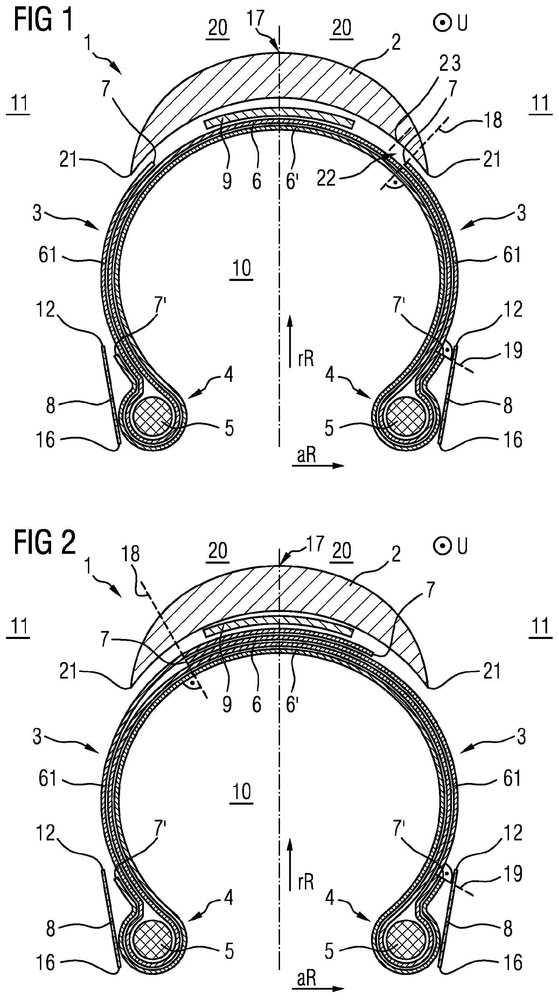

Die Figuren 1 und 2 zeigen jeweils die wesentlichen Reifenbauteile eines Zweiradreifens 1 in einer Querschnittansicht. Es handelt sich um einen Zweiradluftreifen 1, bevorzugt Fahrradreifen, besonders bevorzugt Rennradreifen 1, mit einem Laufstreifen 2, einer Reifenkarkasse, Reifenseitenwänden 3 und zwei Wulstbereichen 4 mit je einem Reifenwulst mit einem Kern 5, wobei die zwei Wulstbereiche 4 als Anscheuerschutz jeweils ein axial außerhalb der Karkasse angeordnetes Wulstschutzband 8 aufweisen.

Die Reifenkarkasse ist aus einer ersten Karkasseinlage 6 und einer zweiten Karkasseinlage 6', jeweils aufweisend Festigkeitsträger, gebildet. Die Festigkeitsträger sind innerhalb der jeweiligen Karkasseinlage parallel zueinander und in einem Winkel zur Umlaufrichtung U von 40 Grad bis 60 Grad angeordnet. Die Festigkeitsträger der beiden Karkasseinlagen 6, 6' weisen einen gegenläufigen Steigungswinkel auf. Der Reifen 1 weist zwei axiale Hälften 20 auf, die, zumindest bezüglich der Karkasseinlagen 6, 6', symmetrisch zueinander ausgebildet sind.

Die zweite Karkasseinlage 6' ist in einem Zenit 17 des Reifens 1 radial innerhalb der ersten Karkasseinlage 6 angeordnet. Sie erstreckt sich vom Zenit 17 des Zweiradluftreifens 1 über die Reifenseitenwände 3 bis in beide Wulstbereiche 4 und umschlingt dort den jeweiligen Kern 5 von axial innen nach axial außen und endet in einem zweiten Karkasseinlagenende 7' unter dem Wulstschutzband 8 des jeweiligen Wulstbereichs 4.

Die erste Karkasseinlage 6 erstreckt sich vom Zenit 17 des Reifens 1 über die Reifenseitenwände bis in die Wulstbereiche 4 und umschlingt dort den jeweiligen Kern von axial innen nach axial außen.

Der Zweiradreifen zeichnet sich dadurch aus, dass die erste Karkasseinlage 6 vom jeweiligen Wulstbereich 4 in einem ersten Karkasseinlagenhochschlag 61 über die jeweilige Reifenseitenwand 3 bis unter den Laufstreifen zu einem ersten Karkasseinlagenende 7 geführt ist und dort unter dem Laufstreifen 2 in dem ersten Karkasseinlagenende 7 endet. Somit ist in beiden axialen Hälften des Reifens in einem Bereich der Seitenwand 3, insbesondere radial zwischen dem zweiten Karkasseinlagenende 7' und einem Laufstreifenende 21, eine Verstärkung der Seitenwand 3 durch drei Lagenstärken der Karkasse gegeben, wobei die erste Karkasseinlage 6 zwei Lagenstärken und die zweite Karkasseinlage 6' eine Lagenstärke beiträgt.

Die erste Karkasseinlage 6 endet in den ersten Karkasseinlagenenden 7 unter dem Laufstreifen 2. Die ersten Karkasseinlagenenden 7 können somit jeweils räumlich zwischen dem Laufstreifen 2 und der zweiten Karkasseinlage 6' sowie radial außerhalb und axial innerhalb der Laufstreifenenden 21 des Laufstreifens angeordnet sein. Eine senkrecht zur zweiten Karkasseinlage 6' ausgerichtete erste Gerade 18 kann den Laufstreifen 2 und das erste Karkasseinlagenende 7 miteinander verbinden.

Die zweite Karkasseinlage 6' endet in den zweiten Karkasseinlagenenden 7' unter dem Wulstschutzband 8 des jeweiligen Wulstbereichs 4. Die zweiten Karkasseinlagenenden 7' können somit jeweils räumlich zwischen dem jeweiligen Wulstschutzband 8 und dem jeweiligen ersten Karkasseinlagenhochschlag 61 im Wulstbereich 4 angeordnet sein. Eine senkrecht zum ersten Karkasseinlagenhochschlag 61 ausgerichtete zweite Gerade 19 kann das Wulstschutzband 8 und das zweite Karkasseinlagenende 7' miteinander verbinden.

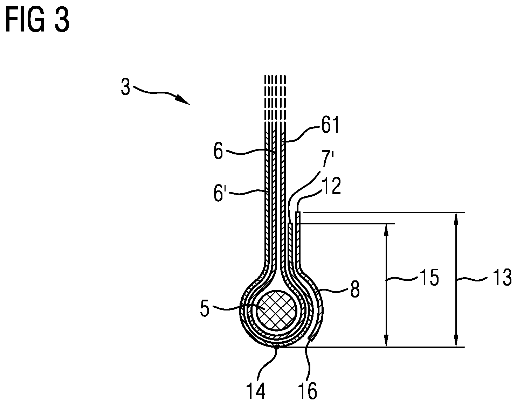

Das Wulstschutzband 8 kann in einem radial äußeren Ende 12 in einer ersten Höhe 13 von maximal 15 mm, bevorzugt von 10 mm bis 12 mm, enden, gemessen relativ zu einem äußersten Umschlagpunkt 14 einer Außenkante der um den Kern 5 herumgeschlagenen Festigkeitsträger der zweiten Karkasseinlage 6'. Alternativ oder zusätzlich können die zweiten Karasseinlagenenden 7' der zweiten Karkasseinlage 6' in einer zweiten Höhe 15 von maximal 13 mm, bevorzugt von 8 mm bis 10 mm, angeordnet sein, gemessen relativ zu einem äußersten Umschlagpunkt 14 der um den Kern 5 herumgeschlagenen Festigkeitsträger der zweiten Karkasseinlage 6'. Eine Bemaßung der ersten Höhe 13 und der zweiten Höhe 15 ist in der Fig. 3 verdeutlicht. Das Wulstschutzband 8 ist als gummiertes Band aufweisend Fasern, insbesondere als gummiertes Gewebeband, ausgeführt.

Die Fasern, insbesondere die Gewebekante des Gewebes, können das radial äußere Ende 12 des Wulstschutzbandes 8 vorgeben. Insbesondere für einen schlauchlosen Betrieb kann das Wulstschutzband 8 frei von miteinander verdrillten Fasern aufweisenden Fäden, die ein radial äußeres Ende 12 des Wulstschutzbandes 8 und ein inneres Ende 16 des Wulstschutzbandes 8 verbinden. In den Figuren 1 und 2 ist das Wulstschutzband 8 beispielhaft als gummiertes Monofilamentgewebe ausgeführt.

Die zweiten Karasseinlagenenden 7' der zweiten Karkasseinlage 6' können im Wulstbereich 4, insbesondere vom Kern 5 herkommend vor der Seitenwand 3, enden.

Die Karkasse ist in direktem Kontakt zum Reifeninnenraum 10. Der Reifen 1 ist insbesondere frei von einem Innerliner. Erfindungsgemäße Vorteile können aber auch durch einen Reifen 1 erzielt werden, der eine weitere Schicht, insbesondere einen Innerliner, zwischen Reifeninnenraum 10 und Karkasse aufweist.

Wie dargestellt können zumindest in einem Bereich der Seitenwand 3, insbesondere von radial außen an das Wulstband 8 anschließend, die beiden Karkasseinlagen 6, 6' die einzigen Festigkeitsträger aufweisenden Einlagen sein.

Zwischen dem Laufstreifen 2 und der Reifenkarkasse kann, wie dargestellt, eine dämpfende Gummieinlage 9 aus einem hochelastischen Kautschuk angeordnet sein,
wobei die dämpfende Gummieinlage 9 insbesondere eine Materialdicke zwischen 0,2 mm und 1 mm aufweist. Bevorzugt kann die dämpfende Gummieinlage aus einem hochelastischen Kautschuk mit einem Rebound-Materialwert zwischen 70 und 80 bestehen.

Zwischen dem Laufstreifen 2 und der Reifenkarkasse kann eine Schutzlage (nicht dargestellt) aufweisend ein insbesondere reißfestes gummiertes Gewebe, bevorzugt ein gummiertes Gewebe aufweisend Fasern aus Polyethylenterephthalat - Polyacrylat, angeordnet sein. Alternativ kann die Schutzlage auch aus einer Gummischicht mit einer Dicke von maximal 6 mm, gemessen in radialer Richtung rR im Reifenzenit 17, gebildet sein.

Es handelt sich bei den dargestellten Reifen jeweils um einen Schlauchlosreifen, insbesondere einen "tubeless" Reifen oder einen "Tubeless Ready" Reifen. Der Reifen kann für den schlauchlosen Betrieb geeignet und vorgesehen sein und dafür genutzt werden. Aber auch ein Reifen für den Betrieb mit Schlauch, insbesondere ein Clincher-Reifen, kann eine vorteilhafte Konstruktion mit entsprechenden Merkmalen aufweisen.

Bei den dargestellten Reifen handelt es sich um Rennradreifen. Aber auch andere Reifen, insbesondere Mountain-Bike Reifen oder Reifen für ein Fahrrad aufweisend einen Elektromotor zum Antrieb des Fahrrads, können entsprechend ausgeführt sein. Auch Motorradreifen, insbesondere Elektroscooterreifen, können die dargestellte vorteilhafte Konstruktion aufweisen.

Die Ausführungsformen der Figur 1 und Figur 2 unterscheiden sich in der Erstreckung der ersten Karkasseinlagenhochschläge 61 und der Anordnung der ersten Karksseinlagenenden 7 unter dem Laufstreifen 2:
Die Figur 1 zeigt einen Reifen 1 mit einem besonders geringen Rollwiderstand. Dabei ist jedes erste Karkasseinlagenende 7 jeweils in derjenigen axialen Hälfte 20 des Reifens 1 unter dem Laufstreifen 2, insbesondere wie dargestellt unter einem Laufstreifenauslauf 22 des Laufstreifens, angeordnet, in welcher die erste Karkasseinlage 6 in dem ersten Karkasseinlagenhochschlag 61 über die Reifenseitenwand 3 bis unter den Laufstreifen 2 zum jeweiligen ersten Karkasseinlagenende 7 geführt ist. Der Laufstreifenauslauf 22 erstreckt sich in der jeweiligen axialen Hälfte 20 des Reifens vom jeweiligen Laufstreifenende 21 aus maximal 10 mm, bevorzugt maximal 2 mm, nach axial innen bis zu einem axial inneren Laufstreifenauslaufende 23, gemessen entlang einer radial inneren Begrenzung des Laufstreifens.

Die beiden ersten Karkasseinlagenhochschläge 61 überlappen somit im Zenit 17 des Reifens 1 nicht. Die ersten Karkasseinlagenenden 7 sind jeweils in derselben axialen Hälfte 20 wie derjenige erste Karkasseinlagenhochschlag 61, der in dem jeweiligen ersten Karkasseinlagenende 7 endet, angeordnet. Die ersten Karkasseinlagenhochschläge 61 sind somit auf die jeweilige axiale Hälfte 20 des Reifens begrenzt angeordnet.

Die Figur 2 zeigt einen besonders pannensicheren Reifen 1. Im Gegensatz zu dem in der Figur 1 dargestellten Reifen sind die beiden ersten Karkasseinlagenhochschläge 7 im Zenit 17 des Reifens 1 einander überlappend angeordnet. Jeder der beiden ersten Karkasseinlagenhochschläge 61 erstreckt sich von einem Wulstbereich 4 in einer axialen Hälfte 20 des Reifens bis unter den Laufstreifen 2 und endet in dem jeweiligen ersten Karkasseinlagenende 7 in der jeweils anderen axialen Hälfte 20 des Reifens. Im Zenit 17 des Reifens erfolgt somit wie dargestellt eine Verstärkung des Reifens 1 durch vier Lagenstärken der Karkasse.

Die Fig. 3 verdeutlicht die Bemaßung der ersten Höhe 13 und der zweiten Höhe 15. Zur Ermittlung der ersten Höhe 13 und der zweiten Höhe 15 kann der Zweiradluftreifen 1 in seinem Querschnitt so aufgebogen sein, dass die beiden Karkasseinlagen 6,6' vom Zenit 17 her kommend im Bereich der Seitenwand 3 weitgehend geradlinig angeordnet sind und in eine bezüglich des Kerns 5 weitgehend symmetrische Umschlingung des Kerns 5 übergehen. Es kann sich dabei um einen Ausschnitt des Reifens der Fig. 1 handeln, wobei der Zweiradluftreifen 1 in seinem Querschnitt entsprechend aufgebogen ist. In dieser Anordnung sind die erste Höhe 13 und die zweite Höhe 15 gemessen relativ zum äußersten Umschlagpunkt 14 einer Außenkante der um den Kern 5 herumgeschlagenen Festigkeitsträger der zweiten Karkasseinlage 6' und gemessen parallel zu den im Bereich der Seitenwand 3 weitgehend geradlinig angeordneten Karkasseinlagen 6, 6'.

### Versuche

Es wurden Versuche mit vier unterschiedlichen Schlauchlosrennradreifen durchgeführt. Dabei wurden die erfindungsgemäßen Reifen R1, ausgebildet gemäß Figur 1, und R2, ausgebildet gemäß Figur 2, getestet. Weiter wurde ein weitgehend mit dem Reifen R1 baugleicher Referenzreifen RR3 getestet, bei dem jedoch im Gegensatz zum Reifen R1 auch die erste Karkasseinlage mit ihren ersten Karkasseinlagenenden bereits unter dem jeweiligen Wulstschutzband endet. Für die Reifen R1, R2 und RR3 wurden bis auf den Karkassaufbau die gleichen Bauteile verwendet. Weiter wurde als Referenzreifen RR4 ein handelsüblicher Rennradtubelessreifen mit genau einer Karkasseinlage getestet, wobei die Hochschläge der Karkasseinlage des Referenzreifens RR4 im Zenit einander überlappend angeordnet sind. Der Referenzreifen RR4 weist zudem für eine ausreichende Luftdichtheit einen Innerliner auf. Die Ergebnisse sind in der Tabelle 1 zusammengefasst.

**Tabelle 1**

| **Reifen** | **R1** | **R2** | **RR3** | **RR4** |
|---|---|---|---|---|
| **Gewicht [g]** | 243 | 263 | 213 | 296 |
| **Rollwiderstand [W]** | 13,4 | 16,3 | 12,6 | 16,2 |
| **Anzahl Verstärkungslagen in der Seitenwand** | 3 | 3 | 2 | 2 |
| **Schnittschutz Seitenwand [N]** | 448 | 446 | 331 | 346 |
| **Anzahl Verstärkungslagen im Zenit** | 2 | 4 | 2 | 3 |
| **Schnittschutz Zenit [N]** | 725 | 1265 | 775 | 1219 |

Der Gewichtsunterschied der Reifen R1, R2 und RR3 ist einzig auf die unterschiedliche Länge der ersten Karkasseinlage zurückzuführen. Der Reifen RR4 ist trotz einlagiger Karkasse aufgrund der Innerlinerschicht schwerer als die anderen Reifen. Dementsprechend steigt das Gewicht der Reifen in der Reihenfolge RR3, R1, R2, RR4.

Der Rollwiderstand wurde bei einem Maximaldruck von 7,5 bar und auf einer 19C Felge ohne Schlauch und Dichtmilch gemessen. Hierbei zeigt sich der Einfluss von Energieverlust durch Reibung zwischen Verstärkungslagen. Der Referenzreifen mit dem geringsten Einsatz an Karkassmaterial und dem geringsten Gewicht weist auch den geringsten Rollwiderstand auf. Der Reifen R1 mit nur einer Lagenstärke mehr in der Seitenwand weist einen etwas größeren Rollwiderstand auf. Den größten Rollwiderstand weisen die beiden Reifen R2 und RR4 auf, wobei sich der Rollwiderstand des Reifens R2 in etwa auf dem gleichen Niveau bewegt wie der Rollwiderstand des handelsüblichen Tubelessreifens RR4 mit einer einzigen Karkasslage.

Der Schnittschutz wurde mit Hilfe von Kraftmessungen beim Durchstich einer Klinge (vergleichbar mit Steinen auf der Fahrbahn) im Zenit des Reifens sowie in der Seitenwand durchgeführt. Bei den Klingenmessungen kommt es bedeutend auf die Anzahl an verstärkenden Lagen an. Entsprechend ist der Schnittschutz im Bereich der Seitenwand der beiden Reifen R1 und R2 gegenüber dem Schnittschutz der Referenzreifen RR3 und RR4 um etwa 30% erhöht. Im Zenit ist der höchste Schnittschutz für den Reifen R2 aufweisend eine Verstärkung im Zenit durch vier Lagenstärken gegeben. Einen etwas geringeren Schnittschutz im Zenit weist der Referenzreifen RR4 auf. Die im Zenit nur zweilagig verstärkten Reifen R1 und RR3 weisen den geringsten Schnittschutz im Zenit auf.

Es zeigt sich somit, dass die erfindungsgemäßen Reifen R1 und R2 den Zielkonflikt aus Pannensicherheit der Seitenwand und Rollwiderstand hohem Niveau zugunsten der Pannensicherheit der Seitenwand lösen. Selbst der Reifen R2 mit dem höchsten Pannenschutz in der Seitenwand und im Zenit weist nur einen Rollwiderstand auf dem Niveau des Referenzreifens RR4 auf.

### Bezugszeichenliste

- 1: Zweiradluftreifen
- 2: Laufstreifen
- 3: Seitenwand
- 4: Wulstbereich
- 5: Kern
- 6: erste Karkasseinlage
- 6': zweite Karkasseinlage
- 7: erstes Karkasseinlagenende
- 7': zweites Karkasseinlagenende
- 8: Wulstschutzband
- 9: Gummieinlage
- 10: Reifeninnenraum
- 11: Reifenaußenraum
- 12: radial äußeres Ende des Wulstschutzbandes
- 13: erste Höhe
- 14: äußerster Umschlagpunkt
- 15: zweite Höhe
- 16: inneres Ende
- 17: Zenit
- 18: erste Gerade
- 19: zweite Gerade
- 20: axiale Hälfte
- 21: Laufstreifenende
- 22: Laufstreifenauslauf
- 23: Laufstreifenauslaufende
- rR: radiale Richtung
- aR: axiale Richtung
- U: Umlaufrichtung

## Patentansprüche

1. Zweiradluftreifen (1), bevorzugt Fahrradreifen, besonders bevorzugt Rennradreifen, mit einem Laufstreifen (2), einer Reifenkarkasse, Reifenseitenwänden (3) und zwei Wulstbereichen (4) mit je einem Reifenwulst mit einem Kern (5), wobei die zwei Wulstbereiche (4) als Anscheuerschutz jeweils ein axial außerhalb der Karkasse angeordnetes Wulstschutzband (8) aufweisen,
• wobei die Reifenkarkasse aus einer ersten Karkasseinlage (6) und einer zweiten Karkasseinlage (6') jeweils aufweisend Festigkeitsträger gebildet ist, wobei die erste Karkasseinlage und die zweite Karkasseinlage jeweils parallel zueinander verlaufende Festigkeitsträger aufweisen, die in elastomeres Material eingebettet sind, wobei die Festigkeitsträger der ersten Karkasseinlage und der zweiten Karkasseinlage einen gegenläufigen Steigungswinkel aufweisen,
• wobei die zweite Karkasseinlage (6') in einem Zenit (17) des Zweiradluftreifens (1) radial innerhalb der ersten Karkasseinlage (6) angeordnet ist und sich vom Zenit (17) des Zweiradluftreifens (1) über die Reifenseitenwände (3) bis in beide Wulstbereiche (4) erstreckt und dort den jeweiligen Kern (5) von axial innen nach axial außen umschlingt und in einem zweiten Karkasseinlagenende (7') unter dem Wulstschutzband (8) des jeweiligen Wulstbereichs (4) endet und
• wobei sich die erste Karkasseinlage (6) vom Zenit (17) des Zweiradluftreifens (1) über die Reifenseitenwände (3) bis in die Wulstbereiche (4) erstreckt und dort den jeweiligen Kern (5) von axial innen nach axial außen umschlingt,
**dadurch gekennzeichnet, dass**
• die erste Karkasseinlage (6) vom jeweiligen Wulstbereich (4) in einem ersten Karkasseinlagenhochschlag (61) über die jeweilige Reifenseitenwand (3) bis unter den Laufstreifen (2) zu einem ersten Karkasseinlagenende (7) geführt ist und dort in dem ersten Karkasseinlagenende (7) endet.

2. Zweiradluftreifen (1) nach Anspruch 1, **dadurch gekennzeichnet, dass** der Reifen (1) zwei axiale Hälften (20) aufweist und dass jedes erste Karkasseinlagenende (7) jeweils in derjenigen axialen Hälfte (20) des Reifens (1) unter dem Laufstreifen (2), insbesondere unter einem Laufstreifenauslauf (22) des Laufstreifens, angeordnet ist, in welcher die erste Karkasseinlage (6) in dem ersten Karkasseinlagenhochschlag (61) über die Reifenseitenwand (3) bis unter den Laufstreifen (2) zum jeweiligen ersten Karkasseinlagenende (7) geführt ist.

3. Zweiradluftreifen (1) nach Anspruch 1, **dadurch gekennzeichnet, dass**
die beiden ersten Karkasseinlagenhochschläge (7) im Zenit (17) des Reifens (1) einander überlappend angeordnet sind.

4. Zweiradluftreifen (1) nach zumindest einem der vorhergehenden Ansprüche,
**dadurch gekennzeichnet, dass**
das Wulstschutzband (8) in einem radial äußeren Ende (12) in einer ersten Höhe (13) von maximal 15 mm, bevorzugt von 10 mm bis 12 mm, endet, gemessen relativ zu einem äußersten Umschlagpunkt (14) der um den Kern (8) herumgeschlagenen Festigkeitsträgern der zweiten Karkasseinlage (6').

5. Zweiradluftreifen (1) nach zumindest einem der vorhergehenden Ansprüche,
**dadurch gekennzeichnet, dass**
das Wulstschutzband (8) als gummiertes Monofilamentgewebe ausgeführt ist.

6. Zweiradluftreifen (1) nach zumindest einem der vorhergehenden Ansprüche,
**dadurch gekennzeichnet, dass**
die Karkasse in direktem Kontakt zu einem Reifeninnenraum (10) steht.

7. Zweiradluftreifen (1) nach zumindest einem der vorhergehenden Ansprüche,
**dadurch gekennzeichnet, dass**
es sich um einen Schlauchlosreifen (1), insbesondere einen "tubeless" Reifen oder einen "Tubeless Ready" Reifen, handelt.

8. Zweiradluftreifen (1) nach zumindest einem der vorhergehenden Ansprüche,
**dadurch gekennzeichnet, dass**
es sich um einen Fahrradreifen (1) für einen Betrieb mit Schlauch, insbesondere um einen Clincher-Reifen, handelt.

9. Zweiradluftreifen (1) nach zumindest einem der vorhergehenden Ansprüche,
**dadurch gekennzeichnet, dass**
zumindest in einem Bereich der Seitenwand (3) die erste Karkasseinlage (6) und die zweite Karkasseinlage (6') die einzigen Festigkeitsträger aufweisenden Einlagen sind.

10. Zweiradluftreifen (1) nach zumindest einem der vorhergehenden Ansprüche,
**dadurch gekennzeichnet, dass**
zwischen dem Laufstreifen (2) und der Reifenkarkasse eine dämpfende Gummieinlage (9) aus einem hochelastischen Kautschuk angeordnet ist, wobei die dämpfende Gummieinlage (9) insbesondere eine Materialdicke zwischen 0,2 mm und 1 mm aufweist.

11. Zweiradluftreifen (1) nach zumindest einem der vorhergehenden Ansprüche,
**dadurch gekennzeichnet, dass**
zwischen dem Laufstreifen (2) und der Reifenkarkasse eine Schutzlage aus einem insbesondere reißfesten gummierten Gewebe, bevorzugt einem insbesondere reißfesten gummierten Gewebe aufweisend Fasern aus Polyethylenterephthalat - Polyacrylat, oder aus einer Gummischicht angeordnet ist.

12. Zweiradluftreifen (1) nach zumindest einem der vorhergehenden Ansprüche,
**dadurch gekennzeichnet, dass**
es sich um einen Fahrradreifen (1), insbesondere um einen Rennradreifen (1), einen Mountain-Bike Reifen oder einen Reifen für ein Fahrrad aufweisend einen Elektromotor zum Antrieb des Fahrrads, handelt.

## Claims

1. Two-wheeled vehicle pneumatic tire (1), preferably bicycle tire, particularly preferably racing bike tire, having a tread (2), having a tire carcass, having tire sidewalls (3) and having two bead regions (4) which each have a tire bead with a core (5), wherein the two bead regions (4) each have, as an anti-chafing guard, a bead protective strip (8) arranged axially outside the carcass,
• wherein the tire carcass is formed from a first carcass inlay (6) and a second carcass inlay (6'), each comprising strength members, wherein the first carcass inlay and the second carcass inlay each have strength members which run parallel to one another and which are embedded in elastomer material, wherein the strength members of the first carcass inlay and of the second carcass inlay have opposing angles of inclination,
• wherein the second carcass inlay (6') is arranged, radially to the inside of the first carcass inlay (6), in a crown (17) of the two-wheeled vehicle pneumatic tire (1), extends from the crown (17) of the two-wheeled vehicle pneumatic tire (1) over the tire sidewalls (3) into the two bead regions (4), loops there around the particular core (5) from axially inside to axially outside, and terminates at a second carcass inlay end (7') under the bead protective strip (8) of the particular bead region (4), and
• wherein the first carcass inlay (6) extends from the crown (17) of the two-wheeled vehicle pneumatic tire (1) over the tire sidewalls (3) into the two bead regions (4), and loops there around the particular core (5) from axially inside to axially outside,
**characterized in that**
• proceeding from the particular bead region (4), the first carcass inlay (6) is guided with a first carcass inlay turn-up (61) over the particular tire sidewall (3) as far as under the tread (2) to a first carcass inlay end (7), and terminates there at the first carcass inlay end (7).

2. Two-wheeled vehicle pneumatic tire (1) according to Claim 1, **characterized in that**
the tire (1) has two axial halves (20), and **in that** each first carcass inlay end (7) is arranged under the tread (2), in particular under a tread runout (22) of the tread, in each case **in that** axial half (20) of the tire (1) in which the first carcass inlay (6) is guided with the first carcass inlay turn-up (61) over the tire sidewall (3) as far as under the tread (2) to the particular first carcass inlay end (7).

3. Two-wheeled vehicle pneumatic tire (1) according to Claim 1, **characterized in that**
the two first carcass inlay turn-ups (7) are arranged so as to overlap one another in the crown (17) of the tire (1).

4. Two-wheeled vehicle pneumatic tire (1) according to at least one of the preceding claims, **characterized in that**
the bead protective strip (8) terminates at a radially outer end (12) at a first height (13) of at most 15 mm, preferably of 10 mm to 12 mm, as measured relative to an outermost turning point (14) of the strength members of the second carcass inlay (6') that are looped around the core (8).

5. Two-wheeled vehicle pneumatic tire (1) according to at least one of the preceding claims, **characterized in that**
the bead protective strip (8) is designed as a rubberized monofilament fabric.

6. Two-wheeled vehicle pneumatic tire (1) according to at least one of the preceding claims, **characterized in that**
the carcass is in direct contact with a tire interior (10).

7. Two-wheeled vehicle pneumatic tire (1) according to at least one of the preceding claims, **characterized in that**
the tire is a tube-free tire (1), in particular a "tubeless" tire or a "tubeless ready" tire.

8. Two-wheeled vehicle pneumatic tire (1) according to at least one of the preceding claims, **characterized in that**
the tire is a bicycle tire (1) for operation with a tube, in particular a clincher tire.

9. Two-wheeled vehicle pneumatic tire (1) according to at least one of the preceding claims, **characterized in that**
at least in one region of the sidewall (3), the first carcass inlay (6) and the second carcass inlay (6') are the only inlays comprising strength members.

10. Two-wheeled vehicle pneumatic tire (1) according to at least one of the preceding claims,
**characterized in that**
a damping rubber inlay (9) composed of a highly elastic rubber is arranged between the tread (2) and the tire carcass,
wherein the damping rubber inlay (9) has in particular a material thickness between 0.2 mm and 1 mm.

11. Two-wheeled vehicle pneumatic tire (1) according to at least one of the preceding claims,
**characterized in that**
a protective ply composed of an in particular tear-resistant rubberized fabric, preferably an in particular tear-resistant rubberized fabric comprising fibers composed of polyethylene terephthalate polyacrylate, or composed of a rubber layer, is arranged between the tread (2) and the tire carcass.

12. Two-wheeled vehicle pneumatic tire (1) according to at least one of the preceding claims,
**characterized in that**
the tire is a bicycle tire (1), in particular a racing bike tire (1), a mountain bike tire or a tire for a bicycle having an electric motor for driving the bicycle.

## Revendications

1. Pneumatique pour deux-roues (1), de préférence pneumatique pour bicyclette, plus préférentiellement pneumatique pour vélo de course, comprenant une bande de roulement (2), une carcasse de pneumatique, des flancs de pneumatique (3) et deux zones de talon (4) chacune dotée d'un talon de pneumatique ayant un noyau (5), les deux zones de talon (4) présentant chacune, en tant que protection contre les chocs, une bande de protection de talon (8) disposée axialement à l'extérieur de la carcasse,
• dans lequel la carcasse de pneumatique est formée d'un premier insert de carcasse (6) et d'un deuxième insert de carcasse (6') comportant chacun des supports de résistance, le premier insert de carcasse et le deuxième insert de carcasse présentant respectivement des supports de résistance parallèles entre eux, qui sont noyés dans un matériau élastomère, les supports de résistance du premier insert de carcasse et du deuxième insert de carcasse présentant des angles d'inclinaison opposés,
• dans lequel le deuxième insert de carcasse (6') est disposé au zénith (17) du pneumatique pour deux-roues (1) radialement à l'intérieur du premier insert de carcasse (6) et s'étend du zénith (17) du pneumatique pour deux-roues (1) via les flancs de pneumatique (3) jusque dans les deux zones de talon (4) et y enlace le noyau (5) respectif d'axialement à l'intérieur vers axialement à l'extérieur et se termine par une deuxième extrémité d'insert de carcasse (7') sous la bande de roulement (8) de la zone de talon (4) respective,
• dans lequel le premier insert de carcasse (6) s'étend du zénith (17) du pneumatique pour deux-roues (1) via les flancs de pneumatique (3) jusque dans les zones de talon (4) et y enlace le noyau (5) respectif d'axialement à l'intérieur vers axialement à l'extérieur,
**caractérisé en ce que**
• le premier insert de carcasse (6) est guidé de la zone de talon (4) respective dans une première remontée d'insert de carcasse (61) via le flanc de pneumatique (3) respectif jusque sous la bande de roulement (2) vers une première extrémité d'insert de carcasse (7) et s'y termine par la première extrémité d'insert de carcasse (7).

2. Pneumatique pour deux-roues (1) selon la revendication 1, **caractérisé en ce que**
le pneumatique (1) présente deux moitiés axiales (20) et **en ce que** chaque première extrémité d'insert de carcasse (7) est respectivement disposée dans la moitié axiale (20) du pneumatique (1) sous la bande de roulement (2), en particulier sous une sortie de bande de roulement (22) de la bande de roulement, dans laquelle est guidé le premier insert de carcasse (6) dans la première remontée d'insert de carcasse (61) via le flanc de pneumatique (3) jusque sous la bande de roulement (2) vers la première extrémité d'insert de carcasse (7) respective.

3. Pneumatique pour deux-roues (1) selon la revendication 1, **caractérisé en ce que**
les deux premières remontées d'insert de carcasse (7) sont disposées de manière à se chevaucher au zénith (17) du pneumatique (1).

4. Pneumatique pour deux-roues (1) selon au moins l'une des revendications précédentes, caractérisé en ce
la bande de protection de talon (8) se termine à une extrémité radialement extérieure (12) à une première hauteur (13) de 15 mm maximum, de préférence de 10 mm à 12 mm, mesurée par rapport à un point de repli le plus extérieur (14) des supports de résistance repliés autour du noyau (8) du deuxième insert de carcasse (6').

5. Pneumatique pour deux-roues (1) selon au moins l'une des revendications précédentes, caractérisé en ce
la bande de protection de talon (8) est réalisée sous forme de tissu monofilament caoutchouté.

6. Pneumatique pour deux-roues (1) selon au moins l'une des revendications précédentes, caractérisé en ce
la carcasse est en contact direct avec l'espace intérieur de pneumatique (10).

7. Pneumatique pour deux-roues (1) selon au moins l'une des revendications précédentes, **caractérisé en ce**
**qu'**il s'agit d'un pneumatique (1) sans chambre à air, en particulier d'un pneumatique "tubeless" ou d'un pneumatique "tubeless ready".

8. Pneumatique pour deux-roues (1) selon au moins l'une des revendications précédentes, **caractérisé en ce**
**qu'**il s'agit d'un pneumatique pour bicyclette (1) destiné à être utilisé avec une chambre à air, en particulier d'un pneu Clincher.

9. Pneumatique pour deux-roues (1) selon au moins l'une des revendications précédentes, **caractérisé en ce**
**qu'**au moins dans une zone de la paroi latérale (3), le premier insert de carcasse (6) et le deuxième insert de carcasse (6') sont les seuls inserts présentant des supports de résistance.

10. Pneumatique pour deux-roues (1) selon au moins l'une des revendications précédentes,
**caractérisé en ce**
**qu'**un insert en caoutchouc amortisseur (9) constitué de caoutchouc hautement élastique est disposé entre la bande de roulement (2) et la carcasse de pneumatique,
l'insert en caoutchouc amortisseur (9) présentant notamment une épaisseur de matériau comprise entre 0,2 mm et 1 mm.

11. Pneumatique pour deux-roues (1) selon au moins l'une des revendications précédentes,
**caractérisé en ce**
**qu'**une couche de protection en un tissu caoutchouté, notamment résistant à la déchirure, de préférence un tissu caoutchouté résistant à la déchirure comportant des fibres de polyéthylène téréphtalate-polyacrylate, ou en une couche de caoutchouc, est disposée entre la bande de roulement (2) et la carcasse du pneumatique.

12. Pneumatique pour deux-roues (1) selon au moins l'une des revendications précédentes,
**caractérisé en ce**
**qu'**il s'agit d'un pneumatique pour bicyclette (1), en particulier d'un pneumatique pour vélo de course (1), d'un pneumatique pour vélo tout terrain ou d'un pneumatique pour bicyclette équipée d'un moteur électrique destiné à entraîner la bicyclette.
